# EUROPEAN PATENT APPLICATION

(11) **EP 4 280 145 A1**
(43) Date of publication of application: **22.11.2023**
(21) Application number: 21954330.3
(22) Date of filing: 06.09.2021
(51) Int. Cl.: G06Q 30/06, G06Q 30/02, G06Q 50/30, G06F 16/33

(54) **PACKAGING MATERIAL MEDIATION PLATFORM AND METHOD**

(30) Priority: 20.08.2021 KR 20210110340
(71) Applicant: Riu Inc., Jeollanam-do 58554 (KR)
(72) Inventor: KIM, Dae Gyoun, Muan-gun Jeollanam-do 58554 (KR)
(74) Representative: Isarpatent
(86) International application number: PCT/KR2021/012065
(87) International publication number: WO 2023/022284

(57) **Abstract**

Disclosed herein is packaging material intermediation platform and method. The packaging material intermediation platform includes: a consulting unit consulting to recommend a packaging material having a material, a shape, and a specification corresponding to a query according to at least one among a product to be packaged, a packaging purpose, and a functional option on the basis of the query from a purchaser terminal; and an estimate providing unit calling for a bid for the packaging material finally selected by the purchaser terminal among the recommended packaging materials, providing an estimate received from a seller terminal to the purchaser terminal, and notifying a seller terminal selected by the purchaser terminal of a selection result.

## Description

### Technical Field

The present invention relates to packaging material intermediation platform and method, and more particularly, to packaging material intermediation platform and method capable of providing consulting services so that a consumer can easily select a packaging material suitable for a desired product without expert knowledge.

### Background Art

In general, packaging materials have various shapes or materials depending on products to be packaged. In particular, the packaging materials have various kinds of materials or specifications according to use purposes, and is very complicated in association such as substitutivity. Therefore, there is a need for expert knowledge of packaging materials in order to purchase or estimate the packaging materials. Due to this situation, purchase and selling of packaging materials are mainly performed offline in apprenticeship.

On the other hand, recently, since a need for contact-free services increases due to infectious diseases, there is an increase in the need for packaging products due to a parcel or the like. Therefore, packaging material purchasers or consumers are greatly increasing. However, since general purchasers or consumers have no expert knowledge and there are various kinds of products to be packaged, there are a lot of difficulties in selecting or purchasing a suitable packaging material.

Therefore, there is a need for a platform that improves accessibility of purchasers or consumers online, lets purchasers or consumers, who have no expert knowledge, directly select a desired packaging material, and provides estimate and intermediation services.

### Disclosure

### Technical Problem

Accordingly, the present invention has been made to solve the above-mentioned problems occurring in the prior arts, and it is an object of the present invention to provide packaging material intermediation platform and method, which can provide consulting services so that a consumer can easily select a packaging material suitable for a desired product without expert knowledge through a keyword search on the online.

It is another object of the present invention to provide packaging material intermediation platform and method, which can provide services with respect to expert packaging material selection, estimate, and intermediation services through consulting for purchasers or consumers, who have no expert knowledge.

### Technical Solution

To accomplish the above object, according to the present invention, there is provided a packaging material intermediation platform including: a consulting unit consulting to recommend a packaging material having a material, a shape, and a specification corresponding to a query according to at least one among a product to be packaged, a packaging purpose, and a functional option on the basis of the query from a purchaser terminal; and an estimate providing unit calling for a bid for the packaging material finally selected by the purchaser terminal among the recommended packaging materials, providing an estimate received from a seller terminal to the purchaser terminal, and notifying a seller terminal selected by the purchaser terminal of a selection result.

In an embodiment of the present invention, the consulting unit: extracts a keyword related to at least one, among the product to be packaged, the packaging purpose, and the functional option, from a search word received from the purchaser terminal; searches a packaging material corresponding to the extracted keyword; and provides a search result to the purchaser terminal.

In an embodiment of the present invention, the consulting unit guides an example of the query for the packaging material, and guides to input at least one among the product to be packaged, the packaging purpose, and the functional option.

In an embodiment of the present invention, the consulting unit: determines whether or not the received search word is a packaging material-related keyword; determines whether or not there is a related search word for the received search word and provides the related search word in a case in which there is no packaging material-related keyword; and provides a recommended search word according to similarity with the received search word.

In an embodiment of the present invention, the consulting unit provides an image, a material, a specification, and a use purpose corresponding to the packaging material as the search result.

In an embodiment of the present invention, the consulting unit arranges the search results in a predetermined order when the search result is less than a threshold value; groups the search results by the degree of relation to provide the search results by groups in a tree structure.

In an embodiment of the present invention, the consulting unit groups the products to be packaged by packaging steps with respect to the degree of relation.

In an embodiment of the present invention, the consulting unit groups the search results according to items that are not applied to the search, among the product to be packaged, the packaging purpose, and the functional option.

In an embodiment of the present invention, the estimate providing unit: registers an estimate request with respect to the finally selected packaging material; links the recommended packaging material information to the estimate request information; and requests additional information on the estimate request information to the purchaser terminal.

In an embodiment of the present invention, the packaging material intermediation platform further includes a chatbot driving unit guiding the purchaser terminal to input information necessary for searching the packaging material. Here, the chatbot driving unit queries the product to be packaged to the purchaser terminal, queries the packaging purpose to the purchaser terminal, and queries packaging-specific matters including the functional option to the purchaser terminal.

In another aspect of the present invention, there is provided a packaging material intermediation method including the steps of: consulting to recommend a packaging material having a material, a shape, and a specification corresponding to a query according to at least one among a product to be packaged, a packaging purpose, and a functional option on the basis of the query from a purchaser terminal; calling for a bid for the packaging material finally selected by the purchaser terminal among the recommended packaging materials, and providing an estimate received from a seller terminal to the purchaser terminal; and notifying a seller terminal selected by the purchaser terminal of a selection result to establish intermediation.

In an embodiment of the present invention, The consulting step includes the steps of: extracting a keyword related to at least one, among the product to be packaged, the packaging purpose, and the functional option, from a search word received from the purchaser terminal; searching a packaging material corresponding to the extracted keyword; and providing a search result to the purchaser terminal.

In an embodiment of the present invention, the consulting step further includes a step of guiding an example of a query for the packaging material. Here, the guiding step guides to input at least one among the product to be packaged, the packaging purpose, and the functional option.

In an embodiment of the present invention, the keyword extraction step includes the steps of: determining whether or not the received search word is a packaging material-related keyword; determining whether or not there is a related search word for the received search word, and providing the related search word in a case in which there is no packaging material-related keyword; and providing a recommended search word according to similarity with the received search word in a case in which there is no related search word.

In an embodiment of the present invention, the search result providing step provides an image, a material, a specification, and a use purpose corresponding to the packaging material.

In an embodiment of the present invention, the search result providing step includes the steps of: arranging the search results in a predetermined order when the search result is less than a threshold value; grouping the search results by the degree of relation to provide the search results by groups in a tree structure.

In an embodiment of the present invention, the search results grouping step groups the products to be packaged by packaging steps with respect to the degree of relation.

In an embodiment of the present invention, the step of providing search results by groups is to group the search results according to items that are not applied to the search, among the product to be packaged, the packaging purpose, and the functional option.

In an embodiment of the present invention, the estimate providing step includes the steps of: registering an estimate request with respect to the finally selected packaging material; linking the recommended packaging material information to the estimate request information; and requesting additional information on the estimate request information to the purchaser terminal.

In an embodiment of the present invention, the consulting step includes the steps of: querying the product to be packaged to the purchaser terminal; querying the packaging purpose to the purchaser terminal; and querying packaging-specific matters including the functional option to the purchaser terminal, and is executed by an AI chatbot.

### Advantageous Effects

The packaging material intermediation platform and method according to an embodiment of the present invention can recommend a suitable packaging material through keyword search related to a desired product to be packaged and a desired packaging material online, and can provide consulting services so that a consumer can easily select a packaging material suitable for a desired product without expert knowledge through a keyword search on the online.

Moreover, the packaging material intermediation platform and method according to an embodiment of the present invention can induce a purchaser to clearly input features of a desired product and a desired packaging material through consulting for purchasers or consumers, who have no expert knowledge, so that anyone can receive services related to expert packaging material selection, estimate, and intermediation services regardless of knowledge level related to packaging materials, thereby improving purchase satisfaction and intermediation reliability.

Furthermore, the packaging material intermediation platform and method according to an embodiment of the present invention provide items necessary for searching through search samples or related search words, recommended search words, or a chatbot, thereby enabling a purchaser to select a desired packaging material without special expert knowledge so as to improve accessibility of the purchaser.

Additionally, the packaging material intermediation platform and method according to an embodiment of the present invention visually provide a search result by each classification so as to help a purchaser to intuitively select a structure for each packaging step or a desired packaging material, thereby improving search efficiency by shortening a selection process or time of the packaging material.

In addition, the packaging material intermediation platform and method according to an embodiment of the present invention can link a search result to an estimate request when a purchaser requests an estimate, thereby preventing an input error and improving accuracy of estimate since it is not necessary to redundantly input information for a request of estimate.

### Brief Description of Drawings

FIG. 1 is a block diagram of a service system to which a packaging material intermediation platform according to an embodiment of the present invention is applied;
FIG. 2 is a detailed block diagram of a packaging material intermediation platform according to an embodiment of the present invention;
FIG. 3 is an example of a screen showing a search result of a packaging material intermediation platform according to an embodiment of the present invention;
FIG. 4 is an example of a chatbot of a packaging material intermediation platform according to an embodiment of the present invention;
FIG. 5 is a flow chart illustrating a packaging material intermediation method according to an embodiment of the present invention;
FIG. 6 is a flow chart showing a consulting step of a packaging material intermediation method according to an embodiment of the present invention;
FIG. 7 is a flow chart showing a keyword extraction step of a packaging material intermediation method according to an embodiment of the present invention;
FIG. 8 is a flow chart showing a search result providing step of a packaging material intermediation method according to an embodiment of the present invention;
FIG. 9 a flow chart showing an estimate request registration step of a packaging material intermediation method according to an embodiment of the present invention;
FIG. 10 is a flow chart showing a chatbot driving step of a packaging material intermediation method according to an embodiment of the present invention.

### Best Mode for Invention

Hereinafter, preferred embodiments of the present invention will be described in detail with reference to the accompanying drawings so that those skilled in the art can easily carry out. The present invention may be implemented in various different forms and is not limited to the embodiments described herein. The description of the present invention in connection contents unrelated to the present invention will be omitted, and like reference numerals refer to like elements throughout the specification.

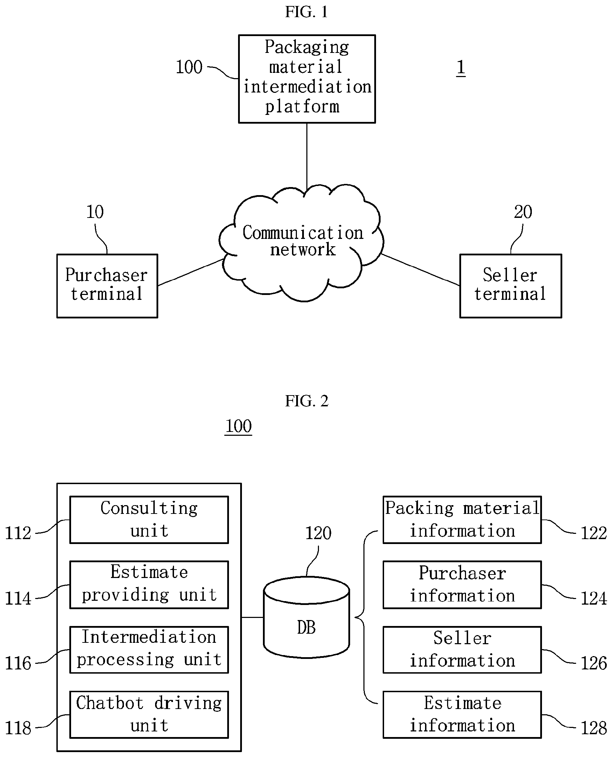

Hereinafter, a packaging material intermediation platform according to an embodiment of the present invention will be described in detail with reference to the drawings. FIG. 1 is a block diagram of a service system to which a packaging material intermediation platform according to an embodiment of the present invention is applied.

Referring to FIG. 1, the packaging material intermediation service system 1 to which a packaging material intermediation platform 100 according to an embodiment of the present invention includes a purchaser terminal 10, a seller terminal 20, and a packaging material intermediation platform 100.

The packaging material intermediation service system 1 provides a service for intermediating the purchaser terminal 10 and the seller terminal 20 through the packaging material intermediation platform 100, and recommends a suitable packaging material through consulting with the purchaser terminal 10. Here, the consulting refers to the overall process of guiding or inducing a purchaser who has no expert knowledge on packaging materials to select a desired packaging material. That is, the packaging material intermediation platform 100 can provide consulting so that the purchaser can select a desired packaging material without a packaging-related expert knowledge, thereby achieving estimate and purchase.

Furthermore, the packaging material intermediation service system 1 provides an intermediation service in such a way that the seller terminal 20 submits an estimate to the purchaser terminal 10 when the purchaser terminal 10 requests an estimate of the packaging material using a template.

In this instance, the purchaser terminal 10 may be a terminal operated by a packaging material purchaser or a consumer. In addition, the purchaser terminal 10 can access to the packaging material intermediation platform 100 to purchase the packaging material and query the packaging material. In this instance, the purchaser terminal 10 can input a packaging material-related search word as a query on a search screen provided by the packaging material intermediation platform 100.

In addition, the purchaser terminal 10 can finally select a desired packaging material among packaging materials recommended by the packaging material intermediation platform 100 and request an estimate of the packaging material. For example, the purchaser terminal 10 can select an estimate request on a search result screen provided by the packaging material intermediation platform 100.

The seller terminal 20 may be a terminal operated by a packaging material seller or a producer. The producer may be a packaging specialized company. In addition, the seller terminal 20 can participate in a bidding on the packaging material intermediation platform 100, and access to the packaging material intermediation platform 100 in order to provide an estimate and to sell a packaging material. For example, the seller terminal 20 provides an estimate according to bidding information provided by the packaging material intermediation platform 100.

Here, the purchaser terminal 10 and the seller terminal 20 may be a portable terminal having a wired communication function like a smart phone or a laptop computer, or a user terminal having a wireless communication function such as a personal computer or the like. The purchaser terminal 10 and the seller terminal 20 are not specifically limited if the purchaser terminal 10 and the seller terminal 20 is accessible to the packaging material intermediation platform 100 through a wired/wireless communication network.

The packaging material intermediation platform 100 can recommend a suitable packaging material based on a query from the purchaser terminal 10. In this instance, the packaging material intermediation platform 100 can search the corresponding packaging material from the query of the purchaser terminal 10.

Additionally, the packaging material intermediation platform 100 can recommend a packaging material corresponding to the query of the purchaser terminal 10 as a result of the recommendation. In this instance, the recommended packaging material may have a material, a shape, and a specification corresponding to the query. Here, the material may be a material of each layer or a single layer forming a packaging material, and the specification may be a standard, such as a size of the packaging material. The shape means a form of the packaging material and may be a pouch, a corrugated box, a paper box, a sticker, or the like.

Accordingly, the packaging material intermediation platform 100 according to an embodiment of the present invention can improve convenience of use and extend service targets since consulting to easily select a packaging material suitable for a desired product without expert knowledge. That is, the packaging material intermediation platform 100 can provide services enabling not only packaging experts but also non-experts who have no knowledge of packaging to use.

In addition, the packaging material intermediation platform 100 can call for a bid for the packaging material finally selected by the purchaser terminal 10, among the recommended packaging materials. That is, the packaging material intermediation platform 100 can register an estimate request of the selected packaging material and receive a plurality of estimates from the seller terminal 20. In addition, the packaging material intermediation platform 100 provides a plurality of estimates received from the seller terminal 20 to the purchaser terminal 10.

In this instance, when the purchaser terminal 10 selects an estimate of the specific seller terminal 20, the packaging material intermediation platform 100 notifies the seller terminal 20 of the selection result, thereby establishing intermediation between the purchaser terminal 10 and the seller terminal 20. After that, the packaging material intermediation platform 100 provides a series of intermediary services, such as cost payment between the purchaser terminal 10 and the seller terminal 20, and a guidance for providing a packaging material.

Hereinafter, with reference to FIGS. 2 to 4, a packaging material intermediation platform 100 according to an embodiment of the present invention will be described in more detail.

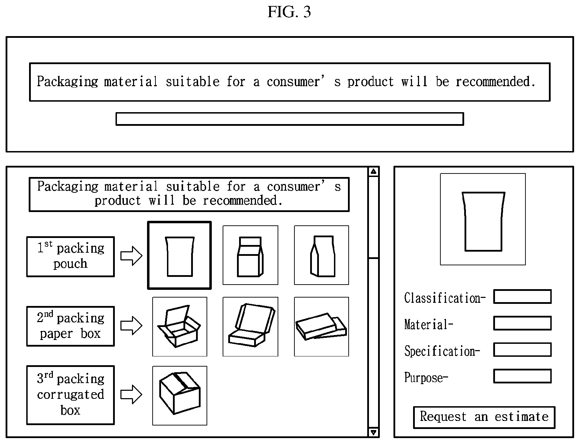

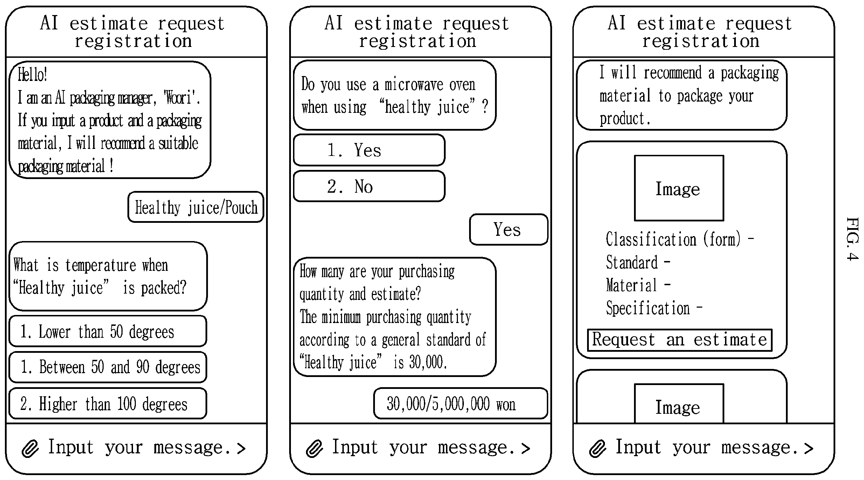

FIG. 2 is a detailed block diagram of a packaging material intermediation platform according to an embodiment of the present invention, FIG. 3 is an example of a screen showing a search result of a packaging material intermediation platform according to an embodiment of the present invention, and FIG. 4 is an example of a chatbot of a packaging material intermediation platform according to an embodiment of the present invention.

Referring to FIG. 2, the packaging material intermediation platform 100 includes a server 110 and a database 120.

The server 110 controls the overall operation of the packaging material intermediation platform 100. The server 110 includes a consulting unit 112, an estimate providing unit 114, and an intermediation processing unit 116.

The consulting unit 112 searches packaging materials from the database 120 according to a query from the purchaser terminal 10. Here, the query may be a search word input through a search screen provided to the purchaser terminal 10. In this instance, the consulting unit 112 can consult to recommend a packaging material having a material, a shape, and a specification corresponding to the query according to at least one among a product to be packaged, a packaging purpose, and a functional option based on the query from the purchaser terminal 10.

Accordingly, the packaging material intermediation platform 100 according to an embodiment of the present invention can consult such that a purchaser can easily select a packaging material suitable for a desired product without any expert knowledge, thereby improving convenience of use and extending a service target.

More specifically, the consulting unit 112 can extract a keyword related to at least one of a product to be packaged, a packaging purpose, and a functional option from a search word received from the purchaser terminal 10. That is, the consulting unit 112 can extract a keyword related to the packaging material to search the database 120 from the search word received from the purchaser terminal 10.

Here, the product to be packaged may be a desired product name, and may be healthy juice, cake, a mask, snack, or the like. The packaging may be used for delivery, selling, shipping or a gift after packaging of the product. The functional option is characteristics or functions to be considered at the time of manufacturing the packaging material, for instance, refrigeration, freezing, being eco-friendly, recycling, water-proofness, or the like.

In this instance, the consulting unit 112 determines whether the keyword received from the purchaser terminal 10 is a packaging material-related keyword. In a case in which the consulting unit 112 is a packaging material-related keyword, that is, when the keyword includes at least one among a product to be packaged, a packaging purpose, and a functional option, the consulting unit 112 searches the database 120 based on the keyword.

In addition, in a case in which the received search word is not the packaging material-related keyword, the consulting unit 112 determines whether a related search word for the search word received from the purchaser terminal 10 exists. In this instance, in a case in which there is a related search word, that is, in a case in which a related search word for the received search word exists in the database 120, the consulting unit 112 provides the related search word. For example, in a case in which there is no keyword for onion juice, the consulting unit 112 provides a similar keyword which has the word, 'juice'.

Moreover, in a case in which the related search word does not exist in the database 120, the consulting unit 112 provides a recommended search word according to similarity with the search word received from the purchaser terminal 10. For example, the consulting unit 112 classifies the search word received from the purchaser terminal 10 per words, and provides a similar word per words as the recommended search word. For example, in a case in which there is not search word of 'Galbitang', the consulting unit 112 recommends Ggigae, retort, or the like, as similar words of 'Tang (soup in English)'. In this instance, the consulting unit 112 registers the recommended search word as a related search word when selection of a packaging material is completed through the recommended search word.

As another example, the consulting unit 112 provides a search word example as a recommended search word. That is, the consulting unit 112 may provide a search word example instead of recommending a search word. For example, the consulting unit 112 provides at least one example among a product to be packaged, a packaging purpose, and a functional option.

Accordingly, the packaging material intermediation platform 100 according to an embodiment of the present invention can improve accessibility of a purchaser since guiding a desired packaging material to be selected without special expert knowledge.

Furthermore, the consulting unit 112 searches the packaging material corresponding to the extracted keyword in the database 120. That is, the consulting unit 112 searches the packaging material corresponding to at least one among the product to be packaged, the packaging purpose, and the functional option in the database 120.

In addition, the consulting unit 112 provides a search result of the database 120 to the purchaser terminal 10. For example, as illustrated in FIG. 3, the consulting unit 112 provides an image, a material, a specification, and a use purpose corresponding to the corresponding packaging material as a search result. In this instance, the search result is one of the results of the query of the purchaser terminal 10 or the purchaser terminal 10 finally selects a packaging material through the consulting of the consulting unit 112.

In this instance, the consulting unit 112 provides packaging information in different forms according to the search result of the database 120. For example, in a case in which the search result of the database 120 is less than a threshold value Th, the consulting unit 112 arranges the search results in a predetermined order. Here, the threshold Th has a numerical value as many as the purchaser terminal 10 can review the search result at a time, for example, ten. Furthermore, the predetermined order may be an order of name, registration time, recommendation number, and product classification. In this instance, the consulting unit 112 can provide the search result as an image.

In addition, if the search result of the database 120 is more than or equal to the threshold value Th, the consulting unit 112 groups the search results according to the degree of relation to provide the grouped search results for each group. In this instance, the consulting unit 112 can provide the search result in a tree structure to facilitate visual confirmation. Furthermore, the consulting unit 112 can provide the search result as an image.

For example, the consulting unit 112 can group products to be packaged according to packaging steps with respect to the degree of relation. Referring to FIG. 3, the consulting unit 112 provides first to third packaging materials for the corresponding product. Here, the first to third packaging materials mean all packaging materials till the corresponding product is used actually. For example, in a case of snack, the first packaging is a pouch, the second packaging is a paper box, and the third packaging is a corrugated cardboard box. In a case of healthy juice, the first packaging is a pouch, the second packaging is a paper box, and the third packaging is a colored cardboard box. In a case of salad, the first packaging is a plastic container, the second packaging is a paper box-paper band or a sticker or a label, and the third packaging is a corrugated cardboard box.

As another example, the consulting unit 112 groups and provides search results according to items that are not applied to the search, among the product to be packaged, the packaging purpose, and the functional option. For example, in a case in which only a product to be packaged is input to the search word, the consulting unit 112 groups and provides the corresponding product according to the use purpose or the functional option. Accordingly, the purchaser terminal 10 can easily select a desired packaging material.

Therefore, the packaging material intermediation platform 100 according to an embodiment of the present invention can help a purchaser to intuitively select a structure for each packaging step or a desired packaging material, thereby improving search efficiency by shortening a selection process or a selection time of the packaging material.

Alternatively, in a case in which it is difficult to recommend a suitable packaging material according to information from the purchaser terminal 10, the consulting unit 112 guides offline consulting. That is, a packaging material suitable for a purchaser can be recommended through offline consulting. In this case, the information recommended through the offline consulting is updated in the database 120.

Alternatively, the consulting unit 112 guides an example of a query for the packaging material prior to input of a search word of the purchaser terminal 10. That is, the consulting unit 112 can guide an example of the query for the packaging material on an initial search screen provided to the purchaser terminal 10. In this instance, the consulting unit 112 guides the purchaser terminal 10 to input at least one among the product to be packaged, the use purpose, and the functional option.

As described above, the consulting unit 112 provides a search result on the basis of the search word received from the purchaser terminal 10, and repeatedly performs search and provides search results so that the purchaser terminal 10 finally selects a packaging material. The consulting unit 112 can provide consulting so that a purchaser who has no expert knowledge on packaging materials can select a packaging material suitable for a desired product to be packaged through the above process.

The estimate providing unit 114 calls for a bid for a finally selected packaging material from the purchaser terminal 10 among the packaging materials recommended by the consulting unit 112. That is, the estimate providing unit 114 registers an estimate request with respect to the packaging material finally selected by the purchaser terminal 10.

The estimate providing unit 114 calls for a bid for the packaging material finally selected by the purchaser terminal 10, among the packaging materials recommended by the consulting unit 112. That is, the estimate providing unit 114 can register an estimate request of the selected packaging material.

In this instance, the estimate providing unit 114 can link the information of the recommended packaging material to the estimate request information. That is, the estimate providing unit 114 can input information of the packaging material recommended by the consulting unit 112 and finally selected by the purchaser terminal 10 material to the estimate request information. For example, the estimate providing unit 114 inputs at least one of material, specification, additional function, use purpose, or product name of the finally selected packaging material to the estimate request information.

Accordingly, the packaging material intermediation platform 100 according to an embodiment of the present invention does not need repeated input of information for an estimate request, thereby preventing an input error and improving accuracy of the estimate.

In addition, the estimate providing unit 114 receives the estimate of the corresponding bid from the seller terminal 20. In this instance, the estimate providing unit 114 provides a deadline for a bid and provides a plurality of estimates received within the deadline to the purchaser terminal 10.

In addition, the estimate providing unit 114 requests additional information on the estimate request information to the purchaser terminal 10. That is, the estimate providing unit 114 requests information necessary for the estimate to the purchaser terminal 10 in addition to the information linked by the consulting unit 112. For example, the estimate providing unit 114 requests purchase quantity, printed contents, estimate title, estimate contents, place, etc.

In this instance, in a case in which the purchaser terminal 10 selects one among lots of estimate information provided from the packaging material intermediation platform 100, the intermediation processing unit 116 notifies the purchaser terminal 10 of the selection result to the selected seller terminal 20. Accordingly, the intermediation processing unit 116 can establish intermediation between the purchaser terminal 10 and the seller terminal 20.

Additionally, the server 110 further includes a chatbot driving unit 118. The chatbot driving unit 118 is provided to guide a purchaser, who has no expert knowledge, to input necessary information for searching packaging materials, and can be implemented to drive the function of the consulting unit 112 by an AI chatbot. In this instance, the chatbot driving unit 118 guides a purchaser to input information related to the packaging material suitable for search of the database 120.

Referring to FIG. 4, the chatbot driving unit 118 may query the product to be packaged to the purchaser terminal 10. Sequentially, the chatbot driving unit 118 makes queries on a packaging purpose or a packaging form to the purchaser terminal 10. Next, the chatbot driving unit 118 makes queries on specific matters of packaging including a functional option to the purchaser terminal 10.

In this case, in a case in which answers to the queries are not suitable, that is, in a case in which search from the database 120 is not achieved, the chatbot driving unit 118 can provide a related search word or a recommended search word as described above. Alternatively, the chatbot driving unit 118 can provide an example of a query.

Accordingly, the packaging material intermediation platform 100 according to an embodiment of the present invention can guide a purchaser who has not exert knowledge to select a desire packaging material, thereby improving accessibility of the purchaser.

In addition, the chatbot driving unit 118 provides a search result for the query to the purchaser terminal 10. Optionally, the chatbot driving unit 118 may omit the search result, and register estimate requests continuously. In this instance, the chatbot driving unit 118 queries additional items required for the estimate to the purchaser terminal 10.

The database 120 stores information required or used for services of the packaging material intermediation platform 100. The database 120 includes packaging material information 122, purchaser information 124, seller information 126, and estimate information 128.

The packaging material information 122 includes packaging material information on material, shape, and specification according to a product to be packaged, a packaging purpose, and a functional option. Furthermore, the packaging information 122 includes a related search word for searching the database 120. The packaging material information 122 may be information accumulated through offline or online consulting.

The purchaser information 124 is a purchaser information that is connected or registered to the packaging material intermediation platform 100 to request selection, estimate and intermediation of a packaging material. For instance, the purchaser information 124 includes an identification number, a contact number, an address, and payment information.

The estimate information 128 may be information in which an estimate request is registered. Furthermore, the estimate information 128 may include a bid notified through the packaging material intermediation platform 100, and estimate information on each bid for which the seller terminal 20 applied.

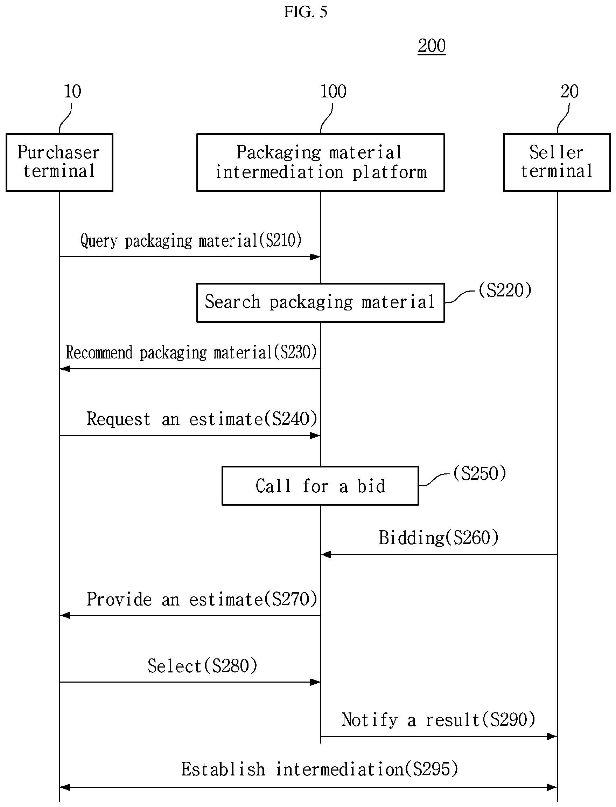

Hereinafter, a packaging material intermediation method according to an embodiment of the present invention will be described with reference to FIGS. 5 to 10.

FIG. 5 is a flow chart of packaging material intermediation method according to an embodiment of the present invention.

The packaging material intermediation method according to an embodiment of the present invention includes steps of: querying a packaging material (S210); consulting about the query (S220 and S230), requesting an estimate (S240); calling for a bid (S250 and S260); providing an estimate (S270); selecting a packaging material (S280); and establishing an intermediation (S290 and S295).

More specifically, as illustrated in FIG. 5, first, the purchaser terminal 10 queries a packaging material to the packaging material mediation platform 100 (Step S210). In this instance, the purchaser terminal 10 can input a search word related to the packaging material as a query on a search screen provided by the packaging material intermediation platform 100.

Next, the packaging material intermediation platform 100 searches for a suitable packaging material based on the query from the purchaser terminal 10 (Step S220). In this instance, the packaging material intermediation platform 100 can search a packaging material according to at least one among a product to be package, a packaging purpose, and a functional option based on the query from the purchaser terminal 10.

Next, the packaging material intermediation platform 100 recommends the searched packaging material to the purchaser terminal 10 (Step S230). That is, the packaging material intermediation platform 100 recommends a packaging material corresponding to the query of the purchaser terminal 10 as a search result. In this instance, the packaging material intermediation platform 100 is configured to recommend a packaging material having material, shape, and specification corresponding to the query.

Next, the purchaser terminal 10 finally selects a desired packaging material from the purchaser terminal 10 among the recommended packaging materials, and requests an estimate (Step S240). In this instance, the purchaser terminal 10 selects an estimate request on a search result screen provided by the packaging material intermediation platform 100.

Next, the packaging material intermediation platform 100 calls for a bid for the estimate requested by the purchaser terminal 10 (Step S250). In this instance, the packaging material intermediation platform 100 registers an estimate request of the packaging material selected by the seller terminal 20 and receives a plurality of estimates from the seller terminal 20.

Next, the seller terminal 20 calls for a bid to the packaging material intermediation platform 100 (Step S260). In this instance, the seller terminal 20 provides an estimate according to bidding information provided by the packaging material intermediation platform 100.

Next, the packaging material intermediation platform 100 provides the estimate received from the seller terminal 20 to the purchaser terminal 10 (Step S270). In this instance, the packaging material intermediation platform 100 provides a plurality of estimates received from the seller terminal 20 to the purchaser terminal 10 by the deadline of the bid.

Next, the purchaser terminal 10 selects one among the estimates provided from the packaging material intermediation platform 100 (Step S280).

Next, the packaging material intermediation platform 100 notifies the seller terminal 20 selected by the purchaser terminal 10 of the selection result (Step S290). In this instance, the packaging material intermediation platform 100 can notify a nonselected seller terminal 20 of non-selection or completion of selection.

Next, the packaging material intermediation platform 100 establishes intermediation between the purchaser terminal 10 and the seller terminal 20 (Step S295). Thereafter, the packaging material intermediation platform 100 provides a series of intermediation services, such as cost payment, packaging material provision guides, and the like, between the purchaser terminal 10 and the seller terminal 20.

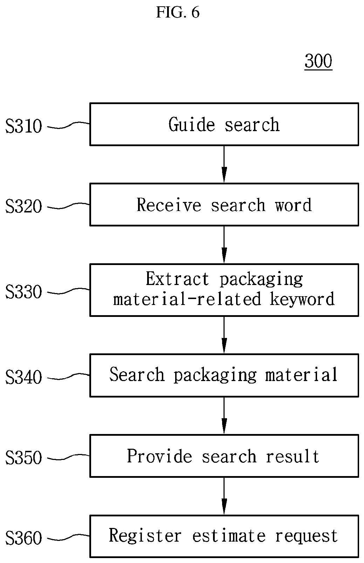

FIG. 6 is a flow chart of a consulting procedure of a packaging material intermediation method according to an embodiment of the present invention.

The consulting procedure 300 includes steps of: guiding search (S310), searching a packaging material (S320 to S 340); providing a search result (S350); and registering a request for an estimate (S360).

More specifically, as illustrated in FIG. 6, first, the packaging material intermediation platform 100 guides an example of a query for a packaging material to the purchaser terminal 10 (Step S310). That is, the packaging material intermediation platform 100 guides an example of a query for the packaging material on an initial search screen provided to the purchaser terminal 10. In this instance, the packaging material intermediation platform 100 guides the purchaser terminal 10 to input at least one among a product to be packaged, a packaging purpose, and a functional option. Such guide of a query example may be optionally provided.

Next, the packaging material intermediation platform 100 receives a search word from the purchaser terminal 10 (Step S320). That is, the packaging material intermediation platform 100 receives a search word input by the purchaser terminal 10 through a search screen.

Next, the packaging material intermediation platform 100 extracts a packaging material-related keyword from the search word received from the purchaser terminal 10 (Step S330). In this instance, the packaging material intermediation platform 100 extracts a keyword related to at least one, among a product to be packaged, a packaging purpose, and a functional option, from the received search word. That is, the packaging material intermediation platform 100 extracts a packaging material-related keyword for searching the database 120 from the search word received from the purchaser terminal 10.

Next, the packaging material intermediation platform 100 searches the packaging material corresponding to the extracted keyword (Step S340). In this instance, the packaging material intermediation platform 100 searches the packaging material corresponding to at least one, among a product to be packaged, a packaging purpose, and a functional option in the database 120.

Next, the packaging material intermediation platform 100 provides the search result to the purchaser terminal 10 (Step S350). In this instance, the packaging material intermediation platform 100 provides an image, a material, a specification, and a use purpose corresponding to the packaging material as a search result.

Alternatively, the packaging material intermediation platform 100 guides offline consulting in a case in which it is difficult to recommend a suitable packaging material according to information from the purchaser terminal 10. That is, the packaging material intermediation platform 100 can recommend a package suitable for a purchaser through offline consulting. In this case, the information recommended through the offline consulting is updated in the database 120.

Next, the packaging material intermediation platform 100 registers an estimate request depending on an estimate request of the purchaser terminal 10 among the provided search results (Step S360). In this instance, the packaging material intermediation platform 100 calls for a bid for the packaging material finally selected by the purchaser terminal 10.

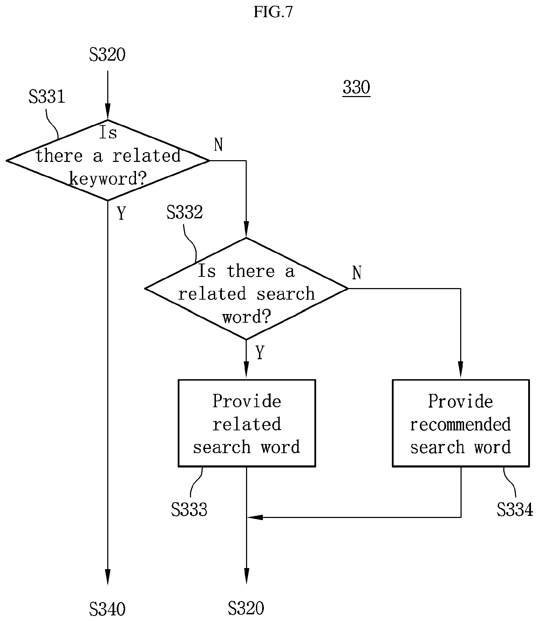

FIG. 7 is a flow chart of a keyword extraction procedure of a packaging material intermediation method according to an embodiment of the present invention.

The keyword extraction procedure 330 includes the steps of: determining whether or not there is a related keyword (S331 and S332); providing a related search word (S333); and providing a recommended search word (S334).

More specifically, as illustrated in FIG. 7, first, the packaging material intermediation platform 100 determines whether or not the search word received from the purchaser terminal 10 is a packaging material-related keyword (Step S331). In this instance, the packaging material intermediation platform 100 determines whether or not there is a related keyword according to whether the received search word includes at least one among a product to be packaged, a packaging purpose, and a functional option.

As a result of the determination of Step S331, in a case in which the received search word is a packaging material-related keyword, the packaging material intermediation platform 100 proceeds to Step S340 to search the database 120 on the basis of the same.

As a result of the determination of Step S331, in a case in which the received search word is not a packaging material-related keyword, the packaging material intermediation platform 100 determines whether or not there is a related search word for the received search word (Step S332). In a case in which there is a related search word, the packaging material intermediation platform 100 provides the related search word to the purchaser terminal 10 (Step S333). That is, in a case in which the related search word for the received search word exists in the database 120, the packaging material intermediation platform 100 provides the related search word.

As a result of the determination of Step S332, in a case in which there is no related search word, the packaging material intermediation platform 100 provides a recommended search word according to similarity with the received search word (Step S334). For example, the packaging material intermediation platform 100 classifies the search words received from the purchaser terminal 10 by words, and provides similar words per words as a recommended search word. In this instance, when selection of the packaging material is completed through the recommended search word, the packaging material intermediation platform 100 registers the corresponding recommended search word as a related search word.

As another example, the packaging material intermediation platform 100 provides an example of a search word as a recommended search word. That is, the packaging material intermediation platform 100 provides an example of a search word instead of recommending a search word. For example, the packaging material intermediation platform 100 provides an example of at least one among a product to be packaged, a packaging purpose, and a functional option.

In this instance, the packaging material intermediation platform 100 proceeds to Step S320 to re-receive a search word from the purchaser terminal 10. That is, the purchaser terminal 10 can re-input a search word through the related search word or the recommended search word provided by the packaging material intermediation platform 100.

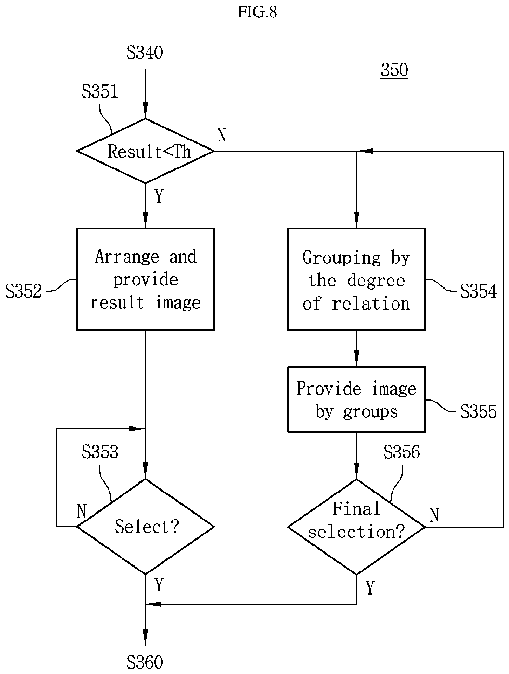

FIG. 8 is a flow chart of a search result provision step of the packaging material mediation method according to an embodiment of the present invention.

The search result provision step S350 includes the steps of: determining the number of search results (S351); arranging and providing the results (S352 and S353); and grouping and providing the results by the degree of relation.

More specifically, as illustrated in FIG. 8, the packaging material intermediation platform 100 determines whether the search result according to the query of the purchaser terminal 10 is less than a threshold value Th (Step S351). In this instance, the packaging material intermediation platform 100 determines the threshold value Th according to whether the purchaser terminal 10 can review the search result at a time. For example, the number of threshold values Th may be 10.

As a result of the determination of Step S351, in a case in which the search result is less than the threshold value, the packaging material intermediation platform 100 arranges the search results in a predetermined order (Step S352). For example, the packaging material intermediation platform 100 arranges and provides the search results in order of name, registration time, recommendation number, and product classification. In this instance, the packaging material intermediation platform 100 provides the search result as an image.

Next, the packaging material intermediation platform 100 determines whether or not the purchaser terminal 10 selects a packaging material (Step S353), and in a case in which there is no selection by the purchaser terminal 10, the packaging material intermediation platform 100 waits until the purchaser terminal 10 selects.

As a result of the determination of Step S351, in a case in which the search result exceeds the threshold value, the packaging material intermediation platform 100 groups the search results by the degree of relation (Step S354). For example, the packaging material intermediation platform 100 groups the search results by packaging steps of the product to be packaged. That is, the packaging material intermediation platform 100 groups the results by first to third packaging materials for the corresponding product.

As another example, the packaging material intermediation platform 100 groups the results according to items that are not applied to the search, among the product to be packaged, the packaging purpose, and the functional option. For example, in a case in which only a product to be packaged is input to the search word, the packaging material intermediation platform 100 groups and provides the corresponding product according to the use purpose or the functional option.

Next, the packaging material intermediation platform 100 provides an image for each group (Step S355). In this instance, the packaging material intermediation platform 100 provides a tree structure to facilitate visual confirmation. Accordingly, the purchaser terminal 10 can easily select a desired packaging material.

Next, the packaging material intermediation platform 100 determines whether or not the purchaser terminal 10 selects a packaging material finally (Step S356). In a case in which the selection of the purchaser terminal 10 is not the final selection, the packaging material intermediation platform 100 proceeds to Step S354 to repeatedly perform grouping by the degree of relation and image provision. For example, in a case in which the search result for each group provided in Step S355 includes a sub-group, the packaging material intermediation platform 100 repeatedly provides search results of the sub-group according to the selection of the purchaser terminal 10.

In this instance, if there is no longer sub-group, the packaging material intermediation platform 100 determines the selection of the purchaser terminal 10 as a final selection.

In a case in which the purchaser terminal 10 selects a packaging material in Step S352 or finally selects a packaging material in Step 356, the packaging material intermediation platform 100 waits for an estimate request from the purchaser terminal 10 and registers an estimate request received from the purchaser terminal 10.

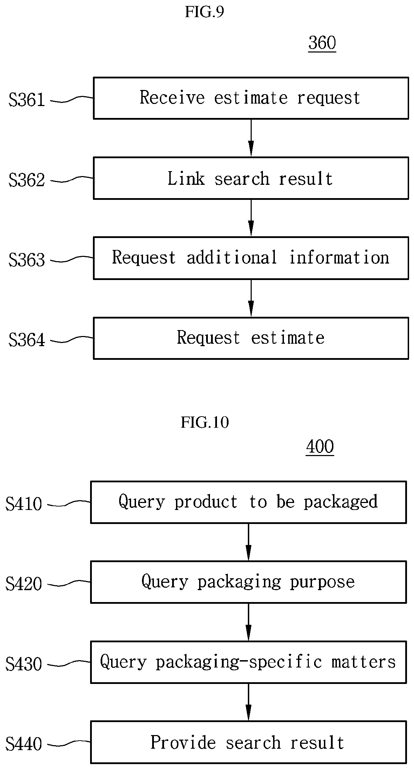

FIG. 9 a flow chart showing an estimate request registration step of a packaging material intermediation method according to an embodiment of the present invention.

The estimate request registration step S360 includes the steps of: receiving an estimate request (S361); linking the search result (S362); requesting additional information (S363); and requesting an estimate (S364).

More specifically, as illustrated in FIG. 9, first, the packaging material intermediation platform 100 receives an estimate request for the packaging material finally selected by the purchaser terminal 10 (Step S361). That is, the packaging material intermediation platform 100 registers an estimate request from the purchaser terminal 10.

Next, the packaging material intermediation platform 100 links a search result to the estimate request information (Step S362). That is, the packaging material intermediation platform 100 can link information of the recommended packaging material to the estimate request information. In this instance, the packaging material intermediation platform 100 can input information of the packaging material recommended as described above and finally selected by the purchaser terminal 10. For example, the packaging material intermediation platform 100 can input at least one, among a material, a specification, an additional function, a use purpose, or a product name of the finally selected packaging material, to the estimate request information.

Next, the packaging material intermediation platform 100 requests additional information on the estimate request information to the purchaser terminal 10 (Step S363). In this instance, the packaging material intermediation platform 100 requests information required for the estimate to the purchaser terminal 10 in addition to the information linked in the step S362. For example, the packaging material intermediation platform 100 requests purchase quantity, printed contents, estimate title, estimate contents, place, etc.

Next, the packaging material intermediation platform 100 requests an estimate to the seller terminal 20 (Step S364). In this instance, the packaging material intermediation platform 100 calls for a bid for the estimate. In addition, the packaging material intermediation platform 100 provides a deadline for the bid.

FIG. 10 is a flow chart showing a chatbot driving step of a packaging material intermediation method according to an embodiment of the present invention.

The chatbot driving step S400 includes the steps of: querying a product to be packaged (S410); querying a packaging purpose (S420); querying specific matters (S430); and providing a search result (S440). The chatbot driving step (S400) is to correspond to the consulting process as described above, and may be performed by an AI chatbot.

More specifically, as illustrated in FIG. 10, first, the AI chatbot queries the product to be packaged by the purchaser terminal 10 (Step S410). For example, the AI chatbot may provide an example of a product to be packaged. As another example, the AI chatbot may provide a number of examples of a product to be packaged so that the purchaser terminal 10 can select.

Next, the AI chatbot queries a packaging purpose to the purchaser terminal 10 (Step S420). For example, the AI chatbot may provide an example of packaging purpose. As another example, the AI chatbot may provide a number of examples of a packaging purpose so that the purchaser terminal 10 can select.

Next, the AI chatbot queries specific matters of the packaging including the functional option to the purchaser terminal 10 (Step S430). In one example, the AI chatbot may provide an example of the specific matter. As another example, the AI chatbot may provide a number of examples of the specific matter so that the purchaser terminal 10 can select.

Next, the AI chatbot provides a search result to the purchaser terminal 10 (Step S440).

Alternatively, the AI chatbot may omit the search result and register estimate requests continuously. In this instance, the AI chatbot can query additional items required for the estimate to the purchaser terminal 10.

The steps described above may be implemented by the packaging material intermediation platform 100 as illustrated in FIG. 1, and in particular, may be implemented by a software program. In this case, such programs may be stored in a computer-readable recording medium or may be transmitted by a computer data signal combined with a carrier wave in a transmission medium or a communication network.

In this instance, the computer-readable recording medium includes all kinds of recording devices in which data readable by a computer system is stored, and may be, for example, a ROM, a RAM, a CD-ROM, a DVD-ROM, a DVD-RAM, a magnetic tape, a floppy disk, a hard disk, an optical data storage, or the like.

Although the present invention has been described with respect to an embodiment of the present invention, it will be understood by those skilled in the art that the idea of the present invention is not limited to the embodiment, and those skilled in the art will readily suggest other embodiments by addition, change, deletion, etc. of components within the range of the idea of the present invention, but such addition, change, deletion, etc. of the components belong to the range of the idea of the present invention.

## Claims

1. A packaging material intermediation platform comprising:
a consulting unit consulting to recommend a packaging material having a material, a shape, and a specification corresponding to a query according to at least one among a product to be packaged, a packaging purpose, and a functional option on the basis of the query from a purchaser terminal; and
an estimate providing unit calling for a bid for the packaging material finally selected by the purchaser terminal among the recommended packaging materials, providing an estimate received from a seller terminal to the purchaser terminal, and notifying a seller terminal selected by the purchaser terminal of a selection result.

2. The packaging material intermediation platform according to claim 1, wherein the consulting unit: extracts a keyword related to at least one, among the product to be packaged, the packaging purpose, and the functional option, from a search word received from the purchaser terminal; searches a packaging material corresponding to the extracted keyword; and provides a search result to the purchaser terminal.

3. The packaging material intermediation platform according to claim 2, wherein the consulting unit guides an example of the query for the packaging material, and guides to input at least one among the product to be packaged, the packaging purpose, and the functional option.

4. The packaging material intermediation platform according to claim 2, wherein the consulting unit: determines whether or not the received search word is a packaging material-related keyword; determines whether or not there is a related search word for the received search word and provides the related search word in a case in which there is no packaging material-related keyword; and provides a recommended search word according to similarity with the received search word.

5. The packaging material intermediation platform according to claim 2, wherein the consulting unit provides an image, a material, a specification, and a use purpose corresponding to the packaging material as the search result.

6. The packaging material intermediation platform according to claim 2, wherein the consulting unit arranges the search results in a predetermined order when the search result is less than a threshold value; and groups the search results by the degree of relation to provide the search results by groups in a tree structure.

7. The packaging material intermediation platform according to claim 6, wherein the consulting unit groups the products to be packaged by packaging steps with respect to the degree of relation.

8. The packaging material intermediation platform according to claim 6, wherein the consulting unit groups the search results according to items that are not applied to the search, among the product to be packaged, the packaging purpose, and the functional option.

9. The packaging material intermediation platform according to claim 1, wherein the estimate providing unit: registers an estimate request with respect to the finally selected packaging material; links the recommended packaging material information to the estimate request information; and requests additional information on the estimate request information to the purchaser terminal.

10. The packaging material intermediation platform according to claim 1, further comprising:
a chatbot driving unit guiding the purchaser terminal to input information necessary for searching the packaging material,
wherein the chatbot driving unit queries the product to be packaged to the purchaser terminal, queries the packaging purpose to the purchaser terminal, and queries packaging-specific matters including the functional option to the purchaser terminal.

11. A packaging material intermediation method comprising the steps of:
consulting to recommend a packaging material having a material, a shape, and a specification corresponding to a query according to at least one among a product to be packaged, a packaging purpose, and a functional option on the basis of the query from a purchaser terminal;
calling for a bid for the packaging material finally selected by the purchaser terminal among the recommended packaging materials, and providing an estimate received from a seller terminal to the purchaser terminal; and
notifying a seller terminal selected by the purchaser terminal of a selection result to establish intermediation.

12. The packaging material intermediation method according to claim 11, wherein the consulting step comprises the steps of:
extracting a keyword related to at least one, among the product to be packaged, the packaging purpose, and the functional option, from a search word received from the purchaser terminal;
searching a packaging material corresponding to the extracted keyword; and
providing a search result to the purchaser terminal.

13. The packaging material intermediation method according to claim 12, wherein the consulting step further comprises a step of guiding an example of a query for the packaging material, and
wherein the guiding step guides to input at least one among the product to be packaged, the packaging purpose, and the functional option.

14. The packaging material intermediation method according to claim 12, wherein the keyword extraction step comprises the steps of:
determining whether or not the received search word is a packaging material-related keyword;
determining whether or not there is a related search word for the received search word, and providing the related search word in a case in which there is no packaging material-related keyword; and
providing a recommended search word according to similarity with the received search word in a case in which there is no related search word.

15. The packaging material intermediation method according to claim 12, wherein the search result providing step provides an image, a material, a specification, and a use purpose corresponding to the packaging material.

16. The packaging material intermediation method according to claim 12, wherein the search result providing step comprises the steps of:
arranging the search results in a predetermined order when the search result is less than a threshold value; and
grouping the search results by the degree of relation to provide the search results by groups in a tree structure.

17. The packaging material intermediation method according to claim 16, wherein the search results grouping step groups the products to be packaged by packaging steps with respect to the degree of relation.

18. The packaging material intermediation method according to claim 16, wherein the step of providing search results by groups is to group the search results according to items that are not applied to the search, among the product to be packaged, the packaging purpose, and the functional option.

19. The packaging material intermediation method according to claim 11, wherein the estimate providing step comprises the steps of:
registering an estimate request with respect to the finally selected packaging material;
linking the recommended packaging material information to the estimate request information; and
requesting additional information on the estimate request information to the purchaser terminal.

20. The packaging material intermediation method according to claim 11, wherein the consulting step comprises the steps of:
querying the product to be packaged to the purchaser terminal;
querying the packaging purpose to the purchaser terminal; and
querying packaging-specific matters including the functional option to the purchaser terminal, and
wherein the consulting step is executed by an AI chatbot.
